(19) Europäisches Patentamt
European Patent Office
Office européen des brevets

(11) **EP 2 162 802 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(51) Int Cl.:
***G05B 17/02*** $^{(2006.01)}$

(21) Anmeldenummer: **08759770.4**

(22) Anmeldetag: **20.05.2008**

(86) Internationale Anmeldenummer:
**PCT/EP2008/056154**

(87) Internationale Veröffentlichungsnummer:
**WO 2008/142068 (27.11.2008 Gazette 2008/48)**

(54) **VERFAHREN UND VORRICHTUNG ZUM BETREIBEN EINER VERBRENNUNGSKRAFTMASCHINE**

METHOD AND DEVICE FOR OPERATING AN INTERNAL COMBUSTION ENGINE

PROCÉDÉ ET DISPOSITIF PERMETTANT DE FAIRE FONCTIONNER UN MOTEUR À COMBUSTION INTERNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.05.2007 DE 102007023849**

(43) Veröffentlichungstag der Anmeldung:
**17.03.2010 Patentblatt 2010/11**

(73) Patentinhaber: **Continental Automotive GmbH 30165 Hannover (DE)**

(72) Erfinder:
- **BEER, Johannes**
  **93051 Regensburg (DE)**
- **KAINZ, Josef**
  **94330 Salching (DE)**

(56) Entgegenhaltungen:
**DE-A1- 19 908 077      DE-A1-102005 042 649 JP-A- 2007 032 462**

## Beschreibung

Die vorliegende Erfindung betrifft ein Verfahren und eine Vorrichtung zum Betreiben einer Verbrennungskraftmaschine unter möglichst genauer Modellierung von Spül-Vorgängen.

Ohne Beschränkung ihres Einsatzfeldes wird die vorliegende Erfindung nachfolgend nur unter Bezugnahme auf Verbrennungsmotoren im Automobilsektor dargestellt. Der Automobil- und Kraftfahrzeugbereich ist aufgrund der hohen Systemanforderungen bei gleichzeitig hohem Kostendruck durch die hohen Absatzzahlen ein wirtschaftlich sehr bedeutender Anwendungsbereich. Alternative Einsatzfelder in der Flugzeug-oder Kraftwerkstechnik werden damit grundsätzlich nicht ausgeschlossen. Ebenso wäre ein erfindungsgemäßer Ansatz auf eine Frischluftseite einer Verbrennungskraftmaschine übertragbar.

In den letzten Jahren wurde im Bereich der Dieselmotoren die Direkteinspritzung des Kraftstoffes in Verbindung mit Turboaufladung zum Standard. Auch bei Ottomotoren sind durch den Einsatz aufgeladener Motoren Verbrauchsvorteile bei gleichzeitig vergrößertem Motormoment realisierbar, so dass sich dort ein vergleichbarer Trend abzeichnet. Um in solchen Systemen einen schnellen Momentenaufbau auch schon bei niedriger Motordrehzahl unter wesentlicher Minderung des sog. Turboloches zu erreichen, kann das sog. Spülen, englisch scavenging, angewandt werden. Darunter versteht man einen Frischluftmassenstrom vom Saugrohr durch die gleichzeitig geöffneten Einlass- und Auslassventile zum Abgassystem hin. Erforderlich hierfür sind ein positives Druckgefälle vom Saugrohr zum Abgaskrümmer und eine variable Ventilsteuerung auf der Einlass- und/oder der Auslassseite. Letztere ist erforderlich, um dafür zu sorgen, dass während einer einstellbaren Ventilüberschneidungszeit beide Ventile offenstehen. Der sich einstellende zusätzliche Spülmassenstrom sorgt für einen erhöhten Massenstrom durch die Turbine des Turboladers und damit zu einer Verschiebung des Betriebspunktes hin zu höheren Wirkungsgraden der Turbine. Daraus resultiert ein schnelleres Ansprechverhalten des Turboladers, eine bessere Restgasausspülung und somit ein schnellerer Aufbau des Motormomentes, siehe auch M. Brandt et al., "DI Turbo mit Scavenging - Weniger Verbrauch durch mehr Drehmoment", Motor & Umwelt 2006.

Besteht in solchen Systemen dagegen ein Druckgefälle vom Abgassystem zur Frischluftseite bei weiterhin vorhandener Ventilüberschneidung, so kommt es zu einem Rückströmen von Abgas in den Brennraum und in das Saugrohr hinein. Dieses Abgas wird, eventuell mit Frischluft vermischt, beim nächsten Ansaugvorgang wieder in den Brennraum gelangen. Dort führt das zurückgeströmte Abgas zusammen mit dem im Totvolumen verbliebenen Restgas zu einem erhöhten Inertgasanteil. Man bezeichnet diesen Vorgang als interne oder auch als reaspirative Abgasrückführung, kurz AGR, oder englisch exhaust gas recirculation, kurz EGR. Die im Brennraum befindliche Restgasmenge beeinflusst u.a. die Brenngeschwindigkeit des Kraftstoff-Luft-Restgas-Gemisches und die dabei auftretenden Emissionen. Über eine Variation der Ventilüberschneidung kann der Abgasanteil an der Gasmenge im Brennraum gezielt beeinflusst werden, so dass eine zusätzliche Steuerungsmöglichkeit mit dem Ziel der Entdrosselung des Motors entsteht.

Weiterhin ist die Kenntnis der durch interne AGR im Brennraum verbliebenen Restgasmenge auch bei Standard-Ottomotoren mit Saugrohreinspritzung mit oder ohne Aufladung eine wichtige Betriebsgröße. Diese Größe findet z.B. zur Korrektur des Zündwinkels in Abhängigkeit von der internen Restgasmenge Verwendung.

In Zukunft wird die genaue Steuerung des Restgasanteils von zentraler Bedeutung für das gegenwärtig intensiv erforschte Prinzip der homogenen Kompressionszündung. Bei diesen neuartigen Motoren, die unter den Bezeichnungen Homogeneous Charge Compression Ignition bzw. abgekürzt als HCCI, oder Controlled Auto Ignition bzw. abgekürzt als CAI bekannt sind, beginnt die Verbrennung eines homogenen Gemisches gleichzeitig im gesamten Brennraum mit dem Ziel einer Senkung des Schadstoffausstoßes. Die Zündung eines Kraftstoff-Luft-Restgas-Gemisches erfolgt dabei allein durch die bei der Kompression auftretende Temperaturerhöhung. Diese Endtemperatur sowie die auftretende Brenngeschwindigkeit können über den Restgasanteil beeinflusst werden. Bei geeigneter Prozessführung können Kraftstoffverbrauch und Emission in erheblichem Maße positiv beeinflusst werden.

Aus der DE 199 08 077 A1 sind ein Verfahren und eine Vorrichtung zur Ermittlung von Kenngrößen zum Steuern einer Brennkraftmaschine im Schichtbetrieb bekannt.

Um die durch Spülen und/oder AGR erzielbaren Vorteile nützen zu können, ist eine möglichst genaue Modellierung dieser Spül-Vorgänge notwendig. Es ist daher Aufgabe der vorliegenden Erfindung, ein Verfahren und eine Vorrichtung der genannten Art zu schaffen, die ohne Schwierigkeit in einem aktuell verfügbaren Motorsteuergerät zur Anwendung kommen können.

Diese Aufgabe wird durch die Merkmale der unabhängigen Ansprüche gelöst. Weitere vorteilhafte Merkmale von Weiterbildungen der Erfindung sind Gegenstand der jeweiligen Unteransprüche.

Der vorliegenden Erfindung liegt die Erkenntnis zugrunde, dass die vorstehende Aufgabe unter Verwendung eines physikalischen Modells lösbar ist, wobei das Modell zu vereinfachen ist, andererseits jedoch die Druckverhältnisse während einer Ventilüberschneidung zu berücksichtigen ist. Dementsprechend arbeitet ein erfindungsgemäßes Verfahren auf Basis einer vereinfachten physikalischen Modellierung eines Zylinders bei Ventilüberschneidung als Strömungsdrossel mit Druckverhältnissen, wie sie bei einer Ventilüberschneidung vorliegenden. Diese Maßnahme steigert die Genauigkeit eines Modells erheblich, da während eines Arbeitsspiels aufgrund von Druckoszillationen im Einlass- und Auslasssystem erhebliche Druckschwankungen auftreten, die bei Verwendung eines Mittelwertes der Drücke ausgeblendet werden. So kann ein Abgasgegendruck aus einem zeitlich gemittelten Abgasgegendruck unter Berücksichtigung einer Drehzahlabhängigkeit nach einer einfachen Formel bestimmt werden, wie nachfolgend noch angegeben.

In einer wesentlichen Weiterbildung der Erfindung werden zusätzlich effektive Querschnittsflächen der Ventilöffnungen bestimmt, um je Strömungsrichtung eine Asymmetrie der Strömungsverhältnisse zu berücksichtigen. Vorzugsweise werden Kalibrationsparameter in einem nichtlinearen Optimierungsverfahren so bestimmt, dass reale Messwerte bestmöglich von einem jeweiligen Modell reproduziert werden.

Auf diesen Ergebnissen aufbauend kann eine verbesserte Modellierung eines Schluckverhaltens angegeben werden, das wiederum Basis für die Bestimmung eines Restgasanteils in einem Zylinder ist, wobei zwischen den Fällen eines Betriebs ohne und mit Ventilüberschneidung unterschieden wird.

Als Vorrichtung zur Umsetzung eines derartigen Verfahrens ist vorteilhafter Weise eine bekannte Motorsteuerung einsetzbar.

Weitere Merkmale und Vorteile der Erfindung werden nachfolgend unter Beschreibung von Ausführungsbeispielen mit Bezugnahme auf die Abbildungen der Zeichnung angegeben. Dazu werden einführend die physikalischen Grundlagen eines erfindungsgemäßen Modells entwickelt und von bereits vorliegenden Arbeiten und aus dem Stand der Technik her bekannten Ansätzen abgegrenzt. Schließlich wird das eigentliche Verfahren beschrieben und dessen Vorteile und Anwendungsmöglichkeiten dargestellt. In der Zeichnung zeigen dazu in schematisierter Form:

Figur 1: eine Darstellung grundsätzlicher Ventilerhebungskurven der Einlass- und Auslassnockenwelle mit einer Ventilüberschneidung VO;

Figur 2: ein Diagramm der Abhängigkeit des Spül- bzw. AGR- Massenstroms vom Saugrohrdruck MAP und vom Abgasgegendruck PE;

Figur 3: Diagramme eines Druckverlaufs in einem Saugrohr und einem Abgassystem während eines Arbeitsspiels;

Figur 4: eine zeichnerische Zusammensetzung der Schlucklinie aus linearem und nichtlinearem Anteil;

Figur 5: ein Diagramm zur relativen Abweichung des modellierten vom gemessenen Luftmassenstrom und

Figur 6: ein Diagramm zur Darstellung eines berechneten Restgasanteils EGR_RATIO als Funktion von CAM_IN und CAM_EX.

Über die verschiedenen Abbildungen hinweg werden nachfolgend einheitlich gleiche Bezugsziffern und Bezeichnungen für gleiche Variablen verwendet.

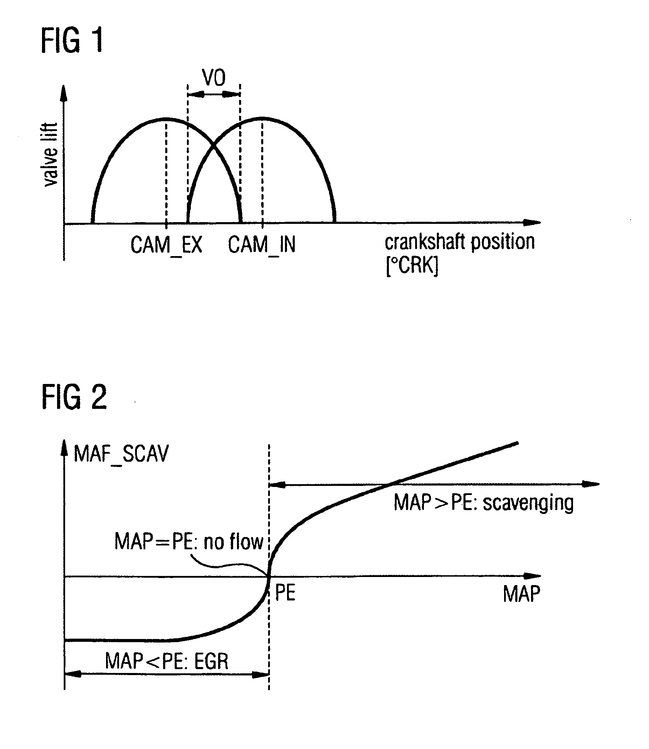

Um die durch Spülen bzw. AGR erzielbaren Vorteile nützen zu können, ist eine möglichst genaue Modellierung dieser Vorgänge da notwendig, wo Messungen entweder nicht vorgesehen, oder zu kostspielig sind. Die Basis eines physikalischen Modells bildet daher eine in wesentlichen Punkten möglichst präzise Abbildung der Vorgänge während einer Ventilüberschneidung. Prinzipielle Ventilerhebungskurven der Einlass- und Auslassnockenwelle mit einer Definition der Nockenwellenposition CAM_IN, CAM_EX und der Ventilüberschneidung VO veranschaulicht die Abbildung von Figur 1.

Die Grundidee dieses Verfahrens ist die Berechnung des Spül- bzw. AGR-Massenstroms auf Basis der Annahme einer Strömung zwischen Saugrohr und Abgassystem, wobei ein Zylinder mit gleichzeitig geöffneten Einlass- und Auslassventilen idealisiert als eine "Drossel" angenommen werden. Dieser Ansatz ist z.B. von Brandt et al. formuliert worden. Der Massenstrom bzw. Mass air flow, kurz MAF, hängt dann unter Annahme einer isentropen Strömung vom Druck MAP und der Temperatur TIA in dem Saugrohr sowie von Druck PE und Temperatur TEX in dem Abgas ab.

Von hoher Bedeutung ist hier, dass wegen der erheblichen Druckschwingungen bzw. Druckoszillationen im Saugrohr und im Abgassystem für den zu modellierenden Massenstrom der jeweilige Druck während der Ventilüberschneidung MAP_DYN, PE_DYN, und eben nicht der mittlere Druck (MAP, PE) relevant ist, siehe M. Brandt et al. a.a.O.. Weiterhin ist zu beachten, dass die Drücke MAP_DYN bzw. PE_DYN auf den Ort des Einlassventils bzw. Auslassventils bezogen sind. Im Unterschied zu den zeitlich gemittelten Drücken MAP bzw. PE hängt wegen der endlichen Ausbreitungsgeschwindigkeit der Druckwellen die Größe des Druckes vom Ort und von der Zeit ab, die Druckwelle breitet sich mit Schallgeschwindigkeit aus.

Damit erhält man durch Anwendung der bekannten Gleichung für die isentrope Strömung eines Gases durch eine Drossel den folgenden Ausdruck für den Spül- bzw. AGR-Massenstrom MAF_SCAV:

$$MAF\_SCAV = AR\_SCAV \cdot$$

$$\left\{ \left[ MAP\_DYN \sqrt{\frac{2\kappa_i}{\kappa_i - 1}} \frac{1}{\sqrt{TIA \cdot R_i}} \cdot \Psi_i \left( PE\_DYN / MAP\_DYN \right) \right] - \right.$$

$$\left. - \left[ PE\_DYN \sqrt{\frac{2\kappa_e}{\kappa_e - 1}} \frac{1}{\sqrt{TEX \cdot R_e}} \cdot \Psi_e \left( MAP\_DYN / PE\_DYN \right) \right] \right\}$$

$$\text{mit:}$$

$$\Psi_{i,e}(x) = \begin{cases} \left( \frac{2}{\kappa_{i,e} + 1} \right)^{1/\kappa_{i,e} - 1} \sqrt{\frac{\kappa_{i,e} - 1}{\kappa_{i,e} + 1}} & \text{für} \quad x < \left( \frac{2}{\kappa_{i,e} + 1} \right)^{\kappa_{i,e}/\kappa_{i,e} - 1} \\ \sqrt{x^{2/\kappa_{i,e}} - x^{\kappa_{i,e}+1/\kappa_{i,e}}} & \text{für} \quad \left( \frac{2}{\kappa_{i,e} + 1} \right)^{\kappa_{i,e}/\kappa_{i,e} - 1} \leq x < 1 \\ 0 & \text{für} \quad x \geq 1 \end{cases} \tag{1}$$

Hierbei bezeichnet AR_SCAV den zeitlich gemittelten effektiven Strömungsquerschnitt des als Drossel modellierten Bereichs, $\kappa_i$ und $\kappa_e$ sind die jeweiligen Isentropenexponenten von Luft und Abgas.

Ein positives Vorzeichen von MAF_SCAV steht demnach für einen Spülmassenstrom, während ein negatives Vorzeichen einer internen AGR entspricht. Die Abbildung von Figur 2 veranschaulicht diesen Zusammenhang graphisch. Dabei ist hier zur Vereinfachung MAP=MAP_DYN und PE=PE_DYN angenommen worden.

In bekannten Motorsteuerungen wird der mittlere Druck im Saugrohr MAP auf Basis eines Behältermodells berechnet, dessen Zuflüsse über eine Drosselklappe und Abflüsse in den Zylinder ebenfalls modelliert werden. Zusätzlich kann auch ein Sensor zur Messung dieses Druckes vorhanden sein, mit dessen Hilfe bei genügender Sensordynamik auch der Druck MAP_DYN gemessen werden könnte. Da sich der Sensor in der Regel nicht direkt am Einlassventil befindet, ist die Laufzeit der Druckwellen vom Sensor zum Ventil zu berücksichtigen. Der mittlere Abgasgegendruck PE wird in der Regel ebenfalls in der Motorsteuerung modelliert.

Ein Drucksensor im Abgassystem ist jedoch unüblich, da ein solcher Sensor sehr hohen Temperaturen im Bereich eines Auslassventils des betreffenden Zylinders ausgesetzt wäre. Damit steht aber die Information über den Abgasgegendruck während der Ventilüberschneidung PE_DYN nicht zur Verfügung. Gerade die Größe des Abgasgegendrucks ist jedoch von zentraler Bedeutung, da sie wegen der im Abgassystem besonders ausgeprägten Druckfluktuationen nicht durch den Mittelwert PE genähert werden kann.

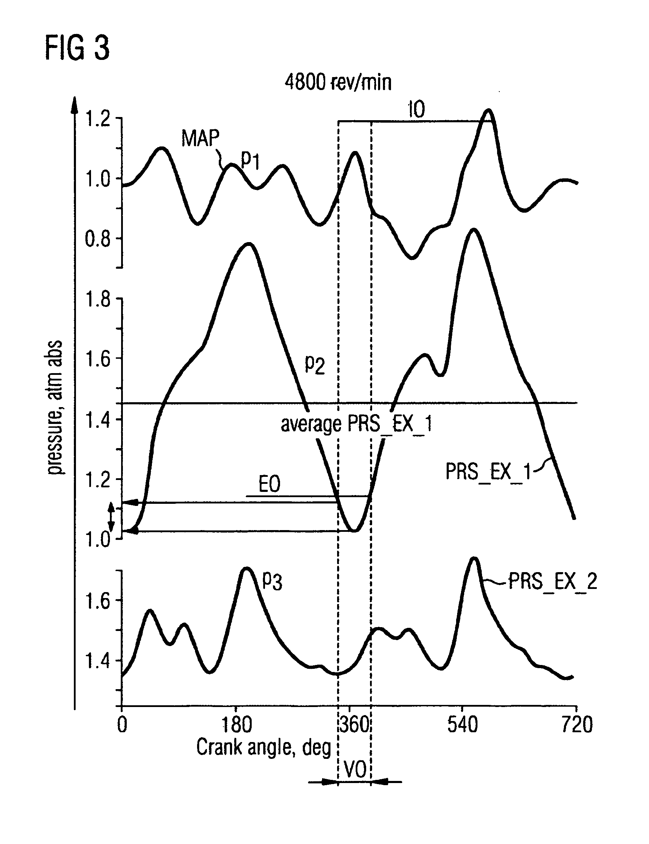

Beispielhaft hierfür stellt die Abbildung von Figur 3 einen Druckverlauf im Saugrohr und Abgassystem während eines Arbeitsspiels dar. Es handelt sich hierbei um einen an einem nicht aufgeladenen 4-Zylinder Ottomotor bei Volllast und einer Kurbelwellendrehzahl N = 4800 1/min gemessenen Druckverlauf im Saugrohr MAP, im Abgassystem nahe dem Auslassventil PRS_EX_1, sowie weiter davon entfernt PRS_EX_2, die als Funktion des Kurbelwellenwinkels dargestellt sind. Diese Abbildung entstammt Seite 216 aus J. Heywood, Internal Combustion Engine Fundamentals, McGraw-Hill, New York, 1988. Ebenfalls eingezeichnet ist die Ventilüberschneidung bzw. valve overlap, kurz VO. Deutlich zu erkennen ist in diesen Diagrammen die erhebliche Abweichung des Abgasgegendruckes während der Ventilüberschneidung vom mittleren Abgasgegendruck.

Die Druckoszillationen im Einlass- bzw. Auslasssystem werden durch das periodische Öffnen der Einlass- bzw. Auslassventile erzeugt. So wird beispielsweise beim Öffnen des Auslassventils eine Druckwelle erzeugt, die sich im Abgassystem ausbreitet. Durch Überlagerung mit gedämpften und teilweise reflektierten Druckwellen aus vorherigen Ladungswechseln des gleichen oder eines anderen Zylinders ergeben sich die beobachteten komplexen Druckoszillationen. Die Modellierung solcher Vorgänge ist mit Hilfe von aufwendigen Simulationsverfahren durchaus möglich. Der dafür nötige numerische Aufwand überschreitet jedoch die in einem Motorsteuergerät verfügbaren Ressourcen um Größenordnungen. Es ist daher erforderlich, ein wesentlich vereinfachtes Modell zur Beschreibung der Druckverhältnisse während der Ventilüberschneidung zu entwickeln. Die bisher dargelegten Grundlagen sind - zumindest in groben Zügen - aus der Literatur bekannt. Eine für das Motorsteuergerät taugliche Lösung für das dargelegte Problem der Modellierung der Druckverhältnisse während der Ventilüberschneidung wird hingegen erst nachfolgend angegeben:

Für die Modellierung des Drucks im Saugrohr bzw. im Abgassystem zum Zeitpunkt der Ventilüberschneidung werden die folgenden Beziehungen vorgeschlagen:

$$MAP\_DYN = IP\_MAP\_COR\_FAC(N) \cdot MAP \qquad (2)$$

$$PE\_DYN = IP\_PE\_COR\_FAC(N) \cdot PE \qquad (3)$$

Die hier verwendeten gemittelten Drücke MAP bzw. PE werden entweder gemessen oder aus entsprechenden Modellen entnommen. Die Korrekturfaktoren IP_MAP_COR_FAC in Gleichung (2) und IP_PE_COR_FAC in Gleichung (3) sind dabei abhängig von der Motordrehzahl N geeignet zu wählen. Durch zeitlich hochauflösende Messung des Druckverlaufes auf dem Motorprüfstand kann die entsprechende Kalibration direkt ermittelt werden. Eine andere, indirekte Möglichkeit ergibt sich durch Auswertung von im Rahmen der Kalibration des Luftpfades standardmäßig durchgeführten Messungen. Im Rahmen eines nichtlinearen Optimierungsverfahren werden dann die Kalibrationsparameter, wie u.a. IP_PE_COR_FAC so bestimmt, dass mit dem nachfolgend angegebenen Anwendungsbeispiel der Modellierung eines nichtlinearen Schluckverhaltens die Messwerte bestmöglich von einem Modell reproduziert werden. Ein besonderer Vorteil dieser Methode liegt darin, dass kein zusätzlicher Messaufwand erforderlich ist.

Eine zusätzliche Abhängigkeit von einer Lastgröße und/oder der Abgastemperatur kann mit in dem Modell hinzugenommen werden. Eine Abhängigkeit von der Nockenwellenstellung, also am Einlass eine Größe CAM_IN und am Auslass CAM_EX, ist in erster Näherung verzichtbar, da sich bei einer Veränderung der Ventilsteuerzeiten die Druck-Oszillationen und der Zeitpunkt der Ventilüberschneidung phasengleich verschieben.

Alternativ zu Gleichung (3) kann auch der folgende Ansatz für die Modellierung von PE_DYN verwendet werden:

$$PE\_DYN = AMP + IP\_PE\_COR\_FAC(N) \cdot (PE - AMP) \qquad (4)$$

Im Unterschied zum einfacheren Ansatz aus Gleichung (3) ist hier zusätzlich die Kenntnis des Umgebungsdruckes AMP erforderlich, der modelliert oder gemessen werden kann. Diesem Ansatz liegt die Vorstellung zugrunde, dass sich der Druckverlauf als Summe eines Gleichanteils AMP und eines oszillierenden Anteils ergibt, wobei letzterer umso größer ist, je mehr der Abgasgegendruck über den Umgebungsdruck ansteigt. Auch hier kann ergänzend eine zusätzliche Abhängigkeit des Faktors IP_PE_COR_FAC von einer Lastgröße und/oder der Abgastemperatur zugelassen werden.

Nun ist eine Modellierung der effektiven Querschnittsfläche vorzunehmen: Zur Berechnung von MAF_SCAV nach Formel (1) in der Motorsteuerung ist nun noch anzugeben, wie die effektive Querschnittsfläche AR_SCAV zu berechnen ist. Ausgehend von der Überlegung, dass für kleine Ventilöffnungen die Querschnittsfläche etwa in zweiter Ordnung mit dem Quadrat des Kurbelwinkels seit Beginn des Ventilhubs ansteigt, vgl. Heywood, a.a.O., S. 222 f, und dass der Überlappungsbereich der Ventilöffnungskurven für Einlass und Auslass eine Breite der Größenordnung VO hat, ist ein kubisches Anwachsen von AR_SCAV mit VO zu erwarten. Als besonders geeignet und sehr einfach hat sich daher der folgende Polynomansatz erwiesen:

$$AR\_SCAV(VO) = (C\_AR\_SCAV\_1 \cdot (VO - C\_AR\_SCAV\_2))^3 \qquad (5)$$

Hierbei sind die zwei Kalibrationsparameter C_AR_SCAV_1 und C_AR_SCAV_2 geeignet zu bestimmen.

Da die Anzahl der Ventilüberschneidungsphasen pro Zeiteinheit proportional zur Drehzahl N ist und die zeitliche Dauer einer Ventilüberschneidung indirekt proportional zu der Drehzahl N ist, sind in niedrigster Ordnung keine Einflüsse der Drehzahl auf AR_SCAV zu erwarten. Dieser Ansatz hat sich bislang als ausreichend erwiesen, jedoch ergaben sich Hinweise auf eine zusätzliche Drehzahlabhängigkeit von AR_SCAV. Demzufolge ist AR_SCAV entweder als Kennlinie abhängig von VO oder als Kennfeld abhängig von VO und N auszuführen.

Zur Berechnung von MAF_SCAV im Steuergerät ist es vorteilhaft, die Funktionen $\Psi_i$ bzw. $\Psi_e$ zusammen mit den Faktoren, die von den Isentropenexponenten und Gaskonstanten abhängen, in je einer Kennlinie abzulegen:

$$IP\_PSI\_1(P\,Q\_PE\_MAP) = \sqrt{\frac{2\kappa_i}{\kappa_i - 1}} \frac{1}{\sqrt{R_i}} \Psi_i (PQ\_PE\_MAP)$$

$$IP\_PSI\_2(P\,Q\_MAP\_PE) = \sqrt{\frac{2\kappa_e}{\kappa_e - 1}} \frac{1}{\sqrt{R_e}} \Psi_e (PQ\_MAP\_PE) \qquad (6)$$

$$PQ\_PE\_MAP = 1/PQ\_MAP\_P\,E = PE\_DYN/MAP\_DYN$$

In bekannten Ansätzen wurde vernachlässigt, dass auch während der Ventilüberschneidungsphase Druckschwankungen auftreten. Dieser Einfluss kann nun durch eine Glättung der Funktionen $\Psi_i$ bzw. $\Psi_e$ zusätzlich berücksichtigt werden.

Weiterhin ist bekannt, dass wegen der Asymmetrie der Strömungsverhältnisse die effektive Querschnittsfläche von der Richtung der Strömung abhängt. Diesem Umstand wird durch die Einführung eines geeignet zu definierenden dimensionslosen Skalierungsfaktors C_AR_SCAV_FAC für die Strömung in Rückwärtsrichtung, also für AGR, Rechnung getragen.

Schließlich ergibt sich nun folgende Berechnungsvorschrift für MAF_SCAV:

$$MAF\_SCAV = AR\_SCAV(VO) \cdot$$
$$\left\{ \left[ MAP\_DYN \cdot \frac{1}{\sqrt{TIA}} \cdot IP\_PSI\_1\,(PQ\_PE\_MAP) \right] - \right.$$
$$\left. - C\_AR\_SCAV\_FAC \cdot \left[ PE\_DYN \cdot \frac{1}{\sqrt{TEX}} \cdot IP\_PSI\_2\,(PQ\_MAP\_PE) \right] \right\} \qquad (7)$$

Die Temperaturen TIA und TEX sind entweder durch entsprechende Sensoren oder durch ein in der Motorsteuerung vorhandenes Modell zu ermitteln. Die inverse Wurzel dieser Größen kann durch eine Kennlinie berechnet werden. Die übrigen Größen werden beispielsweise unter Benutzung der Gleichungen (2) bis (6) berechnet.

Nun werden beispielhaft vorteilhafte Anwendungsmöglichkeiten für das vorgeschlagene Modell aufgezeigt:

a) Modellierung eines nichtlinearen Schluckverhaltens Für den Betrieb moderner Verbrennungsmotoren und die Einhaltung anspruchsvoller Emissionsgrenzwerte muss die Motorsteuerung eine genaue Modellierung des Luftmassenstroms in Abhängigkeit vom Betriebszustand des Motors gewährleisten. Dies ermöglicht es, die einzuspritzende Kraftstoffmenge so zu bemessen, dass ein für die Abgasnachbehandlung im Katalysator optimales Luft-Kraftstoffverhältnis Lambda bzw. $\lambda$ vorliegt. Dazu wird anhand einer Gaspedalstellung ein aktueller Fahrerwunsch bzw. ein gewünschtes Drehmoment sensiert. In der Motorsteuerung erfolgt heute die Beschreibung des Schluckverhaltens der Brennkraftmaschine, das ist die Abhängigkeit der Luftmenge MAF in einem Zylinder als Funktion des Saugrohrdrucks MAP, in Form einer sog. Schlucklinie und in linearisierter Form, also als sog. Schluckgerade:

$$MAF = EFF\_VOL\_SLOP \cdot MAP - EFF\_VOL\_OFS\_1. \qquad (8)$$

Die Kalibrationsgrößen EFF_VOL_OFS_1 und EFF_VOL_SLOP hängen hierbei beispielsweise von N, CAM_IN und CAM_EX ab. Im Fall eines Motorbetriebs mit hoher Ventilüberschneidung ist das Schluckverhalten als Funktion von MAP jedoch deutlich nichtlinear, so dass zusätzliche nichtlineare Beiträge nötig werden. Gegenüber dem Stand der Technik wird hierzu die folgende Erweiterung verwendet:

$$MAF = EFF\_VOL\_SL\,OP \cdot MAP - EFF\_VOL\_OF\,S\_1 + EFF\_VOL\_OF\,S\_2 \qquad (9)$$

Der Term EFF_VOL_OFS_2 hängt als zusätzlicher dynamischer Offset hierbei von VO, N und dem Quotienten der gemittelten Drücke PQ_MAP_PRS_EX = MAP/PE ab.

Im Unterschied dazu wird hier nun vorgeschlagen, die folgende Form zu verwenden

$$MAF = EFF\_VOL\_SLOP \cdot MAP - EFF\_VOL\_OFS\_1 + MAF\_SCAV \qquad (10)$$

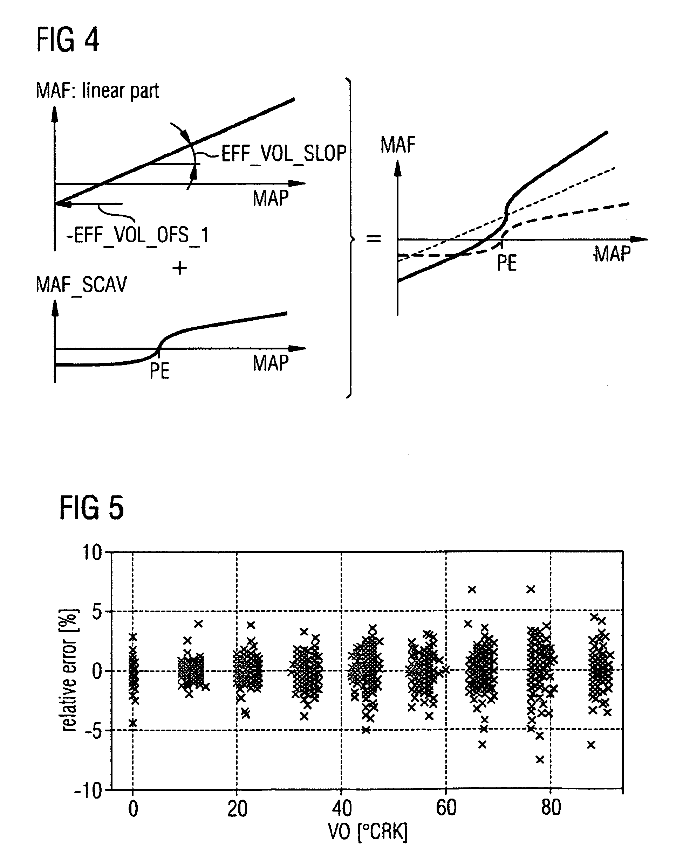

wobei MAF_SCAV mit Hilfe von Gleichung (7) berechnet wird. Eine Veranschaulichung dieses Vorgehens gibt die Abbildung von Figur 4 wieder mit einer zeichnerischen Zusammensetzung der Schlucklinie aus linearem und nichtlinearem Anteil.

Das dargestellte Verfahren bietet folgende Vorteile:

- Der Unterschied zwischen dem gemittelten Drücken MAP und PE bzw. den Drücken während der Ventilüberschneidung MAP_DYN und PE_DYN kann berücksichtigt werden;

- Der Massenstrom MAF_SCAV ist proportional zu MAP_DYN bzw. PE_DYN, was mit dem bisher in der Motorsteuerung verwendeten Ansatz nicht erfasst werden kann.

- Der vorgeschlagene Ansatz benötigt bei vergleichbarem Berechnungsaufwand deutlich weniger Kalibrationsgrößen: zwei Kennfelder für bisherigen Ansatz, jetzt je drei Kennlinien und Konstanten.

- Eine Validierung des Ansatzes zeigte eine verbesserte Modellqualität, insbesondere bei der Beschreibung des veränderten Systemverhaltens in großer Höhe.

- MAF_SCAV beinhaltet eine neue Information über das System: positive Werte können als Spülmassenstrom, negative Werte als AGR-Massenstrom interpretiert werden. Diese Information kann in der Motorsteuerung weiter verwertet werden. Hierzu wird auf das nachfolgende zweite Anwendungsbeispiel verwiesen.

Das dargestellte Verfahren wurde beispielhaft zur Abbildung des Schluckverhaltens eines turboaufgeladenen Vierzylindermotors verwendet. Dieser Verbrennungskraftmotor war mit verstellbaren Nockenwellen auf der Einlass- und der Auslassseite ausgestattet und wies bei großen Ventilüberschneidungen eine erhebliche Nichtlinearität in der MAF (MAP)-Abhängigkeit auf. Die Abbildung von Figur 5 demonstriert die mit dem hier gezeigten Verfahren erreichte gute Modellqualität mit Abweichungen von nur ca. 5 % insbesondere auch bei sehr hohen Ventilüberschneidungen VO.

b) Modellierung einer internen Abgasrückführrate Mit der vorstehend dargestellten Modellierung des Luftmassenstroms MAF ist es möglich, die dort gewonnene Information über den Spül- bzw. AGR-Massenstrom zur Modellierung des im Brennraum verbliebenen Restgasanteils zu verwenden. Diesen kann man sich aus zwei Anteilen zusammengesetzt denken:

b1. Betrieb ohne Ventilüberschneidung

Auch in Betriebszuständen ohne Ventilüberlappung verbleibt eine Restgasmenge im Zylinder. Diese ist unter anderem durch das Brennraumvolumen beim Schließen des Auslassventils und den zu diesem Zeitpunkt herrschenden Abgasgegendruck bestimmt. Je nach Nockenwellenstellung unterscheidet man verschiedene Strategien zur Beeinflussung dieser Restgasmenge:

- Auslasskanalrückführung: Auslass schließt nach dem Ladungswechsel-OT, Restgas wird zuerst ins Abgassystem ausgestoßen und wieder angesaugt

- Einlasskanalrückführung: Einlass öffnet vor dem Ladungswechsel-OT, Restgas wird ins Saugrohr ausgestoßen und wieder angesaugt

- Brennraumrückhaltung: im Ladungswechsel-OT sind alle Ventile geschlossen, die beim Schließen des Auslassventils im dann vorhandenen Brennraumvolumen vorhandene Restgasmenge verbleibt im Zylinder. Dieser Mechanismus beinhaltet auch das aufgrund des Totvolumens mindestens im Zylinder verbleibende Restgas.

Bei Betrieb ohne Ventilüberschneidung kann das Schluckverhalten eines Motors gut durch eine lineare Schlucklinie dargestellt werden. Der Einfluss der verschiedenen Strategien zur Restgassteuerung kommt in der Abhängigkeit des Offsets der Schluckgeraden EFF_VOL_OFS_1 von der Nockenwellenposition zum Ausdruck.

Unter Vernachlässigung der Variation des Abgasgegendrucks mit dem Saugrohrdruck ist dann die interne Restgasmenge proportional zu dem (negativen) Offset der Schluckgeraden EFF_VOL_OFS-1, vgl. Figur 4. Die gesamte, aus Frischluft und Restgas bestehende Zylinderladung ist proportional zu EFF_VOL_SLOP*MAP, so dass unter Annahme einer linearen Schlucklinie der interne Restgasanteil EGR_RATIO gegeben ist durch:

$$EGR\_RATIO = \frac{EFF\_VOL\_OFS\_1}{EFF\_VOL\_SLOP \cdot MAP} \qquad (11)$$

Dies gilt unter der Voraussetzung, dass eine lineare Schlucklinie angesetzt werden kann, und unter der weiteren Bedingung, dass EFF_VOL_SLOP MAP>EFF_VOL_OFS_1. Letzteres ist für den realen Betrieb eines Motors immer der Fall, da andernfalls kein Massenstrom durch den Motor mehr auftritt.

b2. Betrieb mit Ventilüberschneidung

Für den Fall mit Ventilüberschneidung tritt ein zusätzlicher Massenstrom MAF_SCAV durch den Brennraum auf. Unter der Bedingung MAP_DYN>PE_DYN ergibt sich MAF_SCAV>0, d.h. Spülen - siehe auch Figur 2, und der Restgasanteil nimmt ab. Nimmt man an, dass der Spülmassenstrom das im Zylinder verbliebene Restgas ohne Durchmischung einfach herausschiebt, so ist der im Zylinder verbliebene Restgasanteil proportional zu EFF_VOL_OFS_1-MAF_SCAV. Falls MAF_SCAV>EFF_VOL_OFS_1 ist, so ist der Restgasanteil Null.

Im Fall MAP_DYN<PE_DYN ergibt sich MAF_SCAV<0, was bedeutet, dass ein Betriebszustand mit interner AGR vorliegt: Restgas strömt vom Abgassystem durch den Brennraum hindurch ins Saugrohr, um von dort bei darauf folgenden Ansaugtakten wieder vermischt mit Luft in den Brennraum zu gelangen. Das gesamte rückgeführte Abgas gelangt also wieder in den Brennraum, so dass stationär die zuerst ins Saugrohr und dann wieder in den Brennraum verbrachte Restgasmenge proportional zu -MAF_SCAV ist. Zusammen mit der im Brennraum verbliebenen Restgasmenge EFF_VOL_OFS_1 ergibt sich auch hier wieder, dass der im Zylinder befindliche gesamte Restgasanteil proportional zu EFF_VOL_OFS_1-MAF_SCAV ist. Es ergibt sich damit insgesamt in Erweiterung zu Gleichung (11) für den internen Restgasanteil EGR_RATIO als Gleichung (12):

$$EGR\_RATIO = \begin{cases} \dfrac{EFF:VOL\_OFS\_1 - MAF\_SCAV}{EFF\_VOL\_SLOP \cdot MAP} & \text{für} \quad EFF\_VOL\_OFS\_1 \;>\; MAF\_SCAV \\ 0 & \text{sonst} \end{cases}$$

Dies gilt für EFF_VOL_SLOPMAP>EFF_VOL_OFS_1-MAF_SCAV, was auch hier für realen Motorbetrieb immer erfüllt ist.

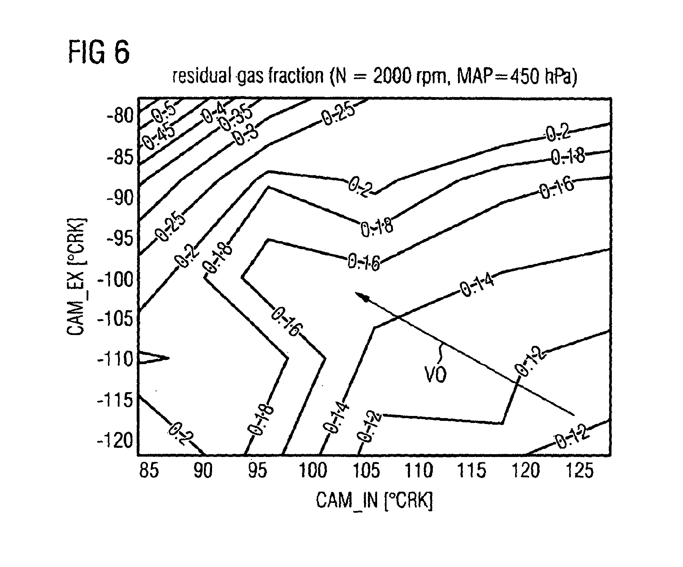

Das Diagramm der Figur 6 zeigt beispielhaft das Ergebnis für einen mit vergleichsweise geringem Aufwand berechneten Restgasanteil EGR_RATIO an einem Lastpunkt als Funktion der beiden Nockenwellenpositionen. Hierbei nimmt die Ventilüberschneidung VO von rechts unten nach links oben hin zu.

Das vorgeschlagene Vorgehen gewährleistet die im Folgenden zu erläuternden Vorteile:

- Modellierung des Drucks im Saugrohr und/oder Abgassystem zu einem bestimmten Zeitpunkt unter erstmaliger Berücksichtigung der Druckfluktuationen;
- Modell für Druck basiert auf physikalischen Ansätzen, kann jedoch mit ausreichender Genauigkeit in einem Motorsteuergerät einfach berechnet werden und benötigt nur wenige Kalibrationsgrößen;
- mit Hilfe des damit zugänglichen Drucks während der Ventilüberschneidung kann der sich einstellende Spül- bzw. AGR-Massenstrom berechnet werden;
- damit ist eine genauere Modellierung des Schluckverhaltens möglich, insbesondere auch bei turboaufgeladenen Motoren mit stark nichtlinearer MAF(MAP)-Abhängigkeit;
- weiterhin kann mit einfachen Mitteln eine Modellierung der internen AGR-Rate vorgenommen werden; diese Größe ist nach bekannten Ansätzen nicht direkt zugänglich, ihre Kenntnis ist jedoch für sowohl für klassische als auch für moderne Brennverfahren von großer Bedeutung;
- außerdem kann der Spülmassenstrom ermittelt werden; dieser Spülmassenstrom ist v.a. bei niedriger Drehzahl die zentrale Größe für die Steigerung des Motordrehmoments durch das sog. Spülen; erst durch eine Modellierung des Spülmassenstroms wird eine sichere Beherrschung und damit ein gezielter Einsatz dieses Effektes möglich.

**Patentansprüche**

1. Verfahren zum Betreiben einer Verbrennungskraftmaschine unter möglichst genauer Modellierung von Spül-Vorgängen, wobei ein Luftstrom (MAF) auf Basis einer vereinfachten physikalischen Modellierung eines Zylinders eines Verbrennungskraftmotors bei Ventilüberschneidung als isentrope Strömung eines Gases durch eine Drossel gerechnet wird, wobei die während einer Ventilüberschneidung (VO) vorliegenden Druckverhältnisse (MAP_DYN, PE_DYN) eingesetzt werden,
**dadurch gekennzeichnet,**
**dass** während der Ventilüberschneidung ein Abgasgegendruck (PE_DYN) aus einem zeitlich gemittelten Abgasgegendruck (PE) als

$$PE\_DYN = IP\_PE\_COR\_FAC(N) \cdot PE$$

oder

$$PE\_DYN = AMP + IP\_PE\_COR\_FAC(N) \cdot (PE - AMP)$$

bestimmt wird,
wobei IP_PE_COR_FAC ein abhängig von der Motordrehzahl (N) geeignet
zu wählender Korrekturfaktor und AMP der Umgebungsdruck ist.

2. Verfahren nach Anspruch 1,
**dadurch gekennzeichnet, dass** während der Ventilüberschneidung ein Druck auf Frischluftseite (MAP_DYN) analog berechnet wird.

3. Verfahren nach Anspruch 1 oder 2,
**dadurch gekennzeichnet, dass** in dem Modell effektive Querschnittsflächen (AR_SCAV) in Abhängigkeit von einer jeweiligen Ventilüberschneidung (VO) verwendet werden.

4. Verfahren nach einem der vorhergehenden Ansprüche, **dadurch gekennzeichnet, dass** Kalibrationsparameter (IP_PE_COR_FAC, C_AR_SCAV_1, C_AR_SCAV_2) in einem nichtlinearen Optimierungsverfahren so bestimmt werden, dass reale Messwerte bestmöglich von einem Modell reproduziert werden.

5. Verfahren nach einem der vorhergehenden Ansprüche, **dadurch gekennzeichnet, dass** der Luftmassenstrom in einen Zylinder (MAF) berechnet wird als

$$MAF = EFF\_VOL\_SLOP \cdot MAP - EFF\_VOL\_OFS\_1 + EFF\_VOL\_OFS\_2 \ ,$$

wobei der Term EFF VOL OFS 2 als zusätzlicher dynamischer Offset hierbei von VO, N und dem Quotienten der gemittelten Drücke PQ_MAP_PRS_EX=MAP/PE abhängt.

6. Verfahren nach einem der vorhergehenden Ansprüche,
**dadurch gekennzeichnet, dass** ein Spülstrom (MAF) unter Berücksichtigung einer Asymmetrie der Strömungsverhältnisse durch einen Skalierungsfaktor (C_AR_SCAV_FAC) nach

$$MAF\_SCAV = AR\_SCAV(VO) \cdot$$

$$\left\{ \left[ MAP\_DYN \cdot \frac{1}{\sqrt{TIA}} \cdot IP\_PSI\_1 \,(PQ\_PE\_MAP\,) \right] - \right.$$

$$\left. - C\_AR\_SCAV\_ \; FAC \cdot \left[ PE\_DYN \cdot \frac{1}{\sqrt{TEX}} \cdot IP\_PSI\_2 \,(PQ\_MAP\_PE\,) \right] \right\}$$

berechnet wird.

7. Verfahren nach dem vorhergehenden Anspruch, **dadurch gekennzeichnet, dass** ein Schluckverhalten eines Verbrennungsmotors bzw. eine Luftmenge (MAF) als Funktion des Saurohrdrucks (MAP) nach

$$MAF = EFF\_VOL\_SL\,OP \cdot MAP - EFF\_VOL\_OF\,S\_1 + MAF\_SCAV$$

berechnet wird.

8. Verfahren nach dem vorhergehenden Anspruch, **dadurch gekennzeichnet, dass** ein Restgasanteil (EGR_RATIO) bei einem Betrieb ohne Ventilüberschneidung und linearer Schlucklinie gemäß

$$EGR\_RATIO = \frac{EFF\_VOL\_OF\,S\_1}{EFF\_VOL\_SL\,OP \cdot MAP}$$

ermittelt wird.

9. Verfahren nach Anspruch 6,
**dadurch gekennzeichnet, dass** ein Restgasanteil (EGR_RATIO) bei einem Betrieb mit Ventilüberschneidung (VO) gemäß

$$EGR\_RATIO = \begin{cases} \dfrac{EFF:VOL\_OFS\_1 - MAF\_SCAV}{EFF\_VOL\_SLOP \cdot MAP} & \text{für} \quad EFF\_VOL\_OFS\_1 > MAF\_SCAV \\ 0 & \text{sonst} \end{cases}$$

ermittelt wird.

10. Vorrichtung zum Betreiben einer Verbrennungskraftmaschine unter möglichst genauer Modellierung von Spül-Vorgängen, die zur Berechnung eines Luftstrom (MAF) auf Basis eines vereinfachten physikalischen Modellierung eines Zylinders eines Verbrennungskraftmotors bei Ventilüberschneidung als isentrope Strömung eines Gases durch eine Drossel ausgebildet ist und einen Eingang für einen die bei einer Ventilüberschneidung (VO) vorliegenden Druckverhältnisse (MAP_DYN, PE_DYN) charakterisierenden Parameter aufweist,
**gekennzeichnet durch** Rechenmittel, mindestens einen Speicher und Signaleingänge, die zusammen die Umsetzung eines Verfahrens nach einem der vorhergehenden Ansprüche ermöglichen.

11. Vorrichtung nach dem vorhergehenden Anspruch, **dadurch gekennzeichnet, dass** die Vorrichtung im Bereich einer Motorsteuerung angeordnet ist.

**Claims**

1. Method for operating an internal combustion engine while modelling flushing operations as accurately as possible, an air flow (MAF) being calculated on the basis of a simplified physical modelling of a cylinder of an internal combustion engine in the case of valve overlap as an isentropic flow of a gas through a choke, the pressure ratios (MAP_DYN, PE_DYN) present during a valve overlap (VO) being used,
**characterised in that**
during the valve overlap an exhaust gas back pressure (PE_DYN) is determined from a temporally averaged exhaust gas back pressure (PE) as

$$\texttt{PE\_DYN = IP\_PE\_COR\_FAC(N) } \cdot \texttt{ PE}$$

or

$$\texttt{PE\_DYN = AMP + IP\_PE\_COR\_FAC(N) } \cdot \texttt{ (PE - AMP),}$$

IP_PE_COR_FAC being a correction factor to be selected as appropriate dependent on the engine speed (N) and AMP being the ambient pressure.

2. Method according to claim 1,
   **characterised in that**
   during the valve overlap a pressure is calculated analogously on the fresh air side (MAP_DYN).

3. Method according to claim 1 or 2,
   **characterised in that**
   effective cross-section surfaces (AR_SCAV) are used in the model depending on a respective valve overlap (VO).

4. Method according to one of the preceding claims, **characterised in that**
   calibration parameters (IP_PE_COR_FAC, C_AR_SCAV_1, C_AR_SCAV_2) are determined in a non-linear optimisation procedure such that real measured values are reproduced in the best possible manner from a model.

5. Method according to one of the preceding claims, **characterised in that**
   the mass air flow in a cylinder (MAF) is calculated as

$$\texttt{MAF = EFF\_VOL\_SL OP} \cdot \texttt{MAP - EFF\_VOL\_OF S\_1 + EFF\_VOL\_OF S\_2,}$$

where the term EFF_VOL_OFS_2 as an additional dynamic offset depends here on VO, N and the quotient of the averaged pressures PQ_MAP_PRS_EX=MAP/PE.

6. Method according to one of the preceding claims, **characterised in that**
   a flush flow (MAF) is calculated, taking into account an asymmetry of the flow ratios, by a scaling factor (C_AR_SCAV_FAC) according to

$$MAF\_SCAV = AR\_SCAV(VO) \cdot$$

$$\left\{ \left[ MAP\_DYN \cdot \frac{1}{\sqrt{TIA}} \cdot IP\_PSI\_1(PQ\_PE\_MAP) \right] - \right.$$

$$\left. -C\_AR\_SCAV\_FAC \cdot \left[ PE\_DYN \cdot \frac{1}{\sqrt{TEX}} \cdot IP\_PSI\_2(PQ\_MAP\_PE) \right] \right\} \ .$$

7. Method according to one of the preceding claims, **characterised in that**
   a throughflow behaviour of an internal combustion engine or an air quantity (MAF) is calculated as a function of the manifold pressure (MAP) according to

$$MAF = EFF\_VOL\_SL\ OP \cdot MAP - EFF\_VOL\_OF\ S\_1 + MAF\_SCAV \quad .$$

**8.** Method according to the preceding claim, **characterised in that** a residual gas proportion (EGR_RATIO) is determined in the case of operation without valve overlap and in the case of a linear throughflow line according to

$$EGR\_RATIO = \frac{EFF\_VOL\_OFS\_1}{EFF\_VOL\_SL\ OP \cdot MAP} \quad .$$

**9.** Method according to claim 6, **characterised in that** a residual gas proportion (EGR_RATIO) is determined in the case of operation with valve overlap (VO) according to

$$EGR\_RATIO = \begin{cases} \dfrac{EFF:VOL\_OFS\_1 - MAF\_SCAV}{EFF\_VOL\_SLOP \cdot MAP} & for\ EFF\_VOL\_OFS\_1 > MAF\_SCAV \\ 0 & otherwise \end{cases}$$

**10.** Apparatus for operating an internal combustion engine while modelling flushing operations as accurately as possible, which is designed for calculating an air flow (MAF) on the basis of a simplified physical modelling of a cylinder of an internal combustion engine in the case of valve overlap as an isentropic flow of a gas through a choke and which has an inlet for a parameter characterising the pressure ratios (MAP_DYN, PE_DYN) present during a valve overlap (VO), **characterised by** calculation means, at least one memory and signal inlets which together permit implementation of a method according to one of the preceding claims.

**11.** Apparatus according to the preceding claim, **characterised in that** the apparatus is disposed in the region of a motor controller.

**Revendications**

**1.** Procédé pour faire fonctionner un moteur à combustion interne avec une modélisation la plus précise possible d'opérations de balayage, un flux d'air (MAF) étant calculé sur la base d'une modélisation physique simplifiée d'un cylindre d'un moteur à combustion interne avec chevauchement des soupapes comme écoulement isotrope d'un gaz à travers un étranglement, les conditions de pression (MAP_DYN, PE_DYN) présentes pendant un chevauchement des soupapes (VO) étant utilisées, **caractérisé en ce que** une contre-pression de gaz d'échappement (PE_DYN) est déterminée pendant le chevauchement des soupapes à partir d'une contre-pression de gaz d'échappement (PE) calculée en moyenne dans le temps sous la forme suivante :

$$PE\_DYN = IP\_PE\_COR\_FAC(N) \cdot PE$$

ou

$$PE\_DYN = AMP + IP\_PE\_COR\_FAC(N) \cdot (PE - AMP)$$

IP_PE_COR_FAC étant un facteur de correction à choisir de façon appropriée en fonction du régime moteur (N) et AMP étant la pression environnante.

2. Procédé selon la revendication 1,
**caractérisé en ce qu'**une pression du côté air frais (MAP_DYN) est calculée de façon analogue pendant le chevauchement des soupapes.

3. Procédé selon la revendication 1 ou 2,
**caractérisé en ce que** des surfaces de section effectives (AR_SCAV) sont utilisées dans le modèle en fonction d'un chevauchement des soupapes respectif (VO).

4. Procédé selon l'une quelconque des revendications précédentes,
**caractérisé en ce que** des paramètres d'étalonnage (IP_PE_COR_FAC, C_AR_SCAV_1, C_AR_SCAV_2) sont déterminés dans un procédé d'optimisation non linéaire de telle sorte que des valeurs de mesure réelles sont reproduites de façon optimale par un modèle.

5. Procédé selon l'une quelconque des revendications précédentes,
**caractérisé en ce que** le flux massique d'air entrant dans un cylindre (MAF) est calculé de la façon suivante
MAF = EFF_VOL_SL OP • MAP - EFF_VOL_OF S_1 + EFF_VOL_OF S_2,
le terme EFF_VOL_OFS_2 en tant que décalage numérique supplémentaire dépendant dans le cas présent de VO, N et du quotient des pressions moyennes PQ_MAP_PRS_EX=MAP/PE.

6. Procédé selon l'une quelconque des revendications précédentes,
**caractérisé en ce qu'**un courant de balayage (MAF) est calculé en tenant compte d'une asymétrie des conditions d'écoulement par un facteur de graduation (C_AR_SCAV_FAC) selon

$$MAF\_SCAV = AR\_SCAV(VO) \cdot$$
$$\left\{ \left[ MAP\_DYN \cdot \frac{1}{\sqrt{TIA}} \cdot IP\_PSI\_1 \ (PQ\_PE\_MAP) \right] - \right.$$
$$\left. - C\_AR\_SCAV\_FAC \cdot \left[ PE\_DYN \cdot \frac{1}{\sqrt{TEX}} \cdot IP\_PSI\_2 \ (PQ\_MAP\_PE) \right] \right\}$$

7. Procédé selon la revendication précédente, **caractérisé en ce qu'**un comportement d'absorption d'un moteur à combustion interne et/ou une quantité d'air (MAF) est calculé comme fonction de la pression du tuyau d'aspiration (MAP) selon la formule suivante :

$$MAF = EFF\_VOL\_SL\ OP \bullet MAP - EFF\_VOL\_OF\ S\_1 + MAF\_SCAV$$

8. Procédé selon la revendication précédente, **caractérisé en ce qu'**une fraction de gaz résiduel (EGR_RATIO) dans le cas d'un fonctionnement sans chevauchement des soupapes et d'une ligne d'absorption linéaire est déterminée selon la formule suivante :

$$EGR\_RATIO = \frac{EFF\_VOL\_OF\ S\_1}{EFF\_VOL\_SL\ OP \cdot MAP}$$

9. Procédé selon la revendication 6,
**caractérisé en ce qu'**une fraction de gaz résiduel (EGR_RATIO) dans le cas d'un fonctionnement sans chevauchement des soupapes (VO) est calculée selon la formule suivante :

$$EGR\_RATIO = \begin{cases} \dfrac{EFF \cdot VOL\_OFS\_1 - MAF\_SCAV}{EFF\_VOL\_SLOP \cdot MAP} & \text{für} \quad EFF\_VOL\_OFS\_1 > MAF\_SCAV \\ 0 & \text{sonst} \end{cases}$$

**10.** Dispositif pour faire fonctionner un moteur à combustion interne avec la modélisation la plus précise possible d'opérations de balayage, qui est conçue pour le calcul d'un flux d'air (MAF) sur la base d'une modélisation physique simplifiée d'un cylindre d'un moteur à combustion interne avec chevauchement des soupapes comme écoulement isotrope d'un gaz à travers un étranglement et présente une entrée pour un paramètre caractérisant les conditions de pression (MAP_DYN, PE_DYN) présentes dans le cas d'un chevauchement des soupapes (VO), **caractérisé par** des moyens de calcul, au moins une mémoire et des entrées de signaux, qui permettent ensemble la mise en oeuvre d'un procédé selon l'une quelconque des revendications précédentes.

**11.** Dispositif selon la revendication précédente, **caractérisé en ce que** le dispositif est disposé dans la zone d'une commande de moteur.

# FIG 1

VO

valve lift

CAM_EX    CAM_IN    crankshaft position [°CRK]

# FIG 2

MAF_SCAV

MAP > PE: scavenging

MAP = PE: no flow

PE                    MAP

MAP < PE: EGR

FIG 3

4800 rev/min

## FIG 4

MAF: linear part

EFF_VOL_SLOP

MAP

-EFF_VOL_OFS_1

+

MAF_SCAV

PE          MAP

=

MAF

PE          MAP

## FIG 5

## FIG 6

residual gas fraction (N = 2000 rpm, MAP = 450 hPa)

CAM_EX [°CRK] vs CAM_IN [°CRK]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19908077 A1

**In der Beschreibung aufgeführte Nicht-Patentliteratur**

- **M. Brandt et al.** DI Turbo mit Scavenging - Weniger Verbrauch durch mehr Drehmoment. *Motor & Umwelt,* 2006

- **J. Heywood.** Internal Combustion Engine Fundamentals. McGraw-Hill, 1988, 216